**Europäisches Patentamt**

**European Patent Office**

**Office européen des brevets**

(11) Publication number : **0 569 163 A1**

# EUROPEAN PATENT APPLICATION

(21) Application number : **93303111.4**

(22) Date of filing : **21.04.93**

(51) Int. Cl.⁵ : **C06B 31/28,** F26B 3/08, C05C 1/02

(30) Priority : **05.05.92 GB 9209620**

(43) Date of publication of application :
**10.11.93 Bulletin 93/45**

(84) Designated Contracting States :
**DE FR GB SE**

(71) Applicant : **IMPERIAL CHEMICAL INDUSTRIES PLC**
**Imperial Chemical House, Millbank London SW1P 3JF (GB)**

(71) Applicant : **ICI CANADA INC**
**90 Sheppard Avenue East North York Ontario, M2N 6H2 (CA)**

(72) Inventor : **Oliver, Raymond**
**68 Junction Road, Norton Stockton-on-Tees, Cleveland (GB)**
Inventor : **Peddie, Ronald Otto, Block L8, Techn. Dept. AECI**
**Explosives & Chem. Ltd., Private Bag X2 Modderfontein, 1645, Transvaal (ZA)**

(74) Representative : **Ede, Eric**
**Group Patents Services Department, P O Box 6, Shire Park, Bessemer Road Welwyn Garden City, Herts, AL7 1HD (GB)**

(54) **Improvements in prill drying.**

(57)  A process for obtaining explosives grade ammonium nitrate (EGAN) prill comprises the step of drying substantially mono-sized EGAN "wet" prill by a process of solids plug flow fluidisation using a vertical transverse flow of drying gas to yield a product of bulk density around 0.6 to 0.7 gm/cc and a final water content in the range of from around 0.1 to 0.6% by weight water.

EP 0 569 163 A1

This invention concerns ammonium nitrate prill as used in explosive formulations such as ANFO (which is ammonium nitrate (AN) prill containing absorbed fuel oil (FO) at a level of about 6% by weight or higher) and HANFO, or "Heavy ANFO", which is a blend of AN prill (or ANFO) and emulsion explosive.

Explosives grade ammonium nitrate prill (herein "EGAN" prill) is required to be sufficiently porous to be able to absorb the quantity of fuel oil needed for an effective explosives composition. Porosity, which is indicated comparatively by particle density and bulk density, is affected by the conditions of prill formation (especially the initial water content of the spray melt) and the conditions under which the residual small percentage of water (up to 5% by weight) in the collected product at the base of the prill tower is removed by a drying process (down to e.g. 0.1 to 0.2% by weight). The size of EGAN prill is usually around 2 to 3 mm diameter, but larger diameters are not excluded.

In the specification of copending UK patent application No. 91 24 304.8 a process is described for producing predominantly monosized prills of AN in a prilling tower by a modification of the process described in published EP-A-0 320 153. The disclosure in UK 91 24 304.8 is as follows: "It is known from EP-A-0 320 153 that the disintegration of a liquid jet comprising a highly concentrated solution of ammonium nitrate can be controlled so as to produce a substantially monosize distribution of droplets and hence, on solidification, particles. The disintegration is controlled by causing the plate, wherein an orifice which produces the liquid jet is located, to vibrate at a predetermined frequency and in a plane substantially perpendicular to the direction of flow of the liquid jet, thereby inducing a so-called asymmetric disturbance on the surface of the liquid jet. The vibration is required to have an amplitude which is substantially smaller than that used in other systems wherein the orifice containing plate is vibrated in a plane parallel to the direction of flow of the liquid jet and/or wherein the orifice containing plate is swung from side to side. The predetermined frequency is required to be calculated according to the expression

$$f_{opt} = u_j.(4.5d_j)^{-1} \quad (1)$$

wherein $f_{OPT}$ is the frequency in Hertz, $u_j$ is the velocity of the jet from the orifice (m.s$^{-1}$) and $d_j$ is the diameter of the orifice (m). The effect of applying a vibration having the predetermined frequency was confirmed using water, which flow properties are similar to those of a highly concentrated solution of ammonium nitrate, and was successfully applied to the prilling of fertilizer grade ammonium nitrate. It is known in the art that fertilizer grade ammonium nitrate is required to have a high bulk density, and to be relatively nonporous. In order to achieve these desired properties the fertilizer grade ammonium nitrate is produced from a highly concentrated ammonium nitrate solution having an ammonium nitrate concentration of at least 99% by weight, which is known in the art as ammonium nitrate melt or molten ammonium nitrate. Prilling of ammonium nitrate solutions having ammonium nitrate concentrations of less than 99% by weight, e.g. 96% by weight produce a lower density, porous, and physically weaker material which is not as suitable for use as a fertiliser.

It is also known to use ammonium nitrate as an explosive, however, the required characteristics of explosive grade ammonium nitrate are different from those of fertilizer grade ammonium nitrate in that explosive grade ammonium nitrate is required to be relatively porous so that it is able to more readily absorb the various additives and conditioners used to sensitize it to detonation. Thus, in the preparation of explosive grade ammonium nitrate it is required that a solution having a low concentration of ammonium nitrate, i.e. less than 99% w/w, is prilled and the resulting droplets solidified in a generally similar process to that used for the preparation of fertilizer grade ammonium nitrate. In the preparation of explosive grade ammonium nitrate it is also desirable to obtain a monosize distribution of particles. Application of asymmetric vibrations to the orifice containing plate at a predetermined frequency calculated according to the method disclosed in EP-A-0 320 153, however, does not lead to the preparation of explosive grade ammonium nitrate comprising particles having a monosize distribution.

It has now been found that prilling of solutions containing low concentrations of ammonium nitrate can be controlled to give monosize distributions of droplets and hence particles by applying vibrations to the orifice containing plate which are of a frequency determined according to an expression which is different from expression (1).

Accordingly the present invention provides a prilling process wherein a liquid comprising between 90 to 98% w/w ammonium nitrate is caused to flow through an orifice in a plate thereby forming a liquid jet and that as the liquid flows through the orifice the plate is vibrated in a plane substantially perpendicular to the direction of the liquid jet thereby producing an asymmetric disturbance to the surface of the liquid jet and the frequency of the vibration at or within 10% of the optimum frequency as given by the expression

$$f_{OPT} = u_j.(\pi.2^{0.5}.d_j(1 + 3z))^{-1} \quad (2)$$

wherein $f_{OPT}$ is the frequency in Hertz, $u_j$ is the velocity of the jet from the orifice (m.s$^{-1}$), $d_j$ is the diameter of the orifice (m), z is the dimensionless group $(We_j)^{0.5}.(Re_j)^{-1}$, $We_j$ is $d_j u_j^2 p.y^{-1}$, $Re_j$ is $d_j u_j p.g^{-1}$, p is the density of the liquid (kg.m$^{-3}$), y is the surface tension of the liquid (N.m$^{-1}$) and g is the viscosity of the liquid (Ns.m$^{-2}$).

One of the differences between the prilling of fertilizer grade ammonium nitrate and explosive grade ammonium nitrate is that the physical properties, in particular the viscosity of the ammonium nitrate solution, influences the hydrodynamics of the droplet formation process thereby preventing the direct use of the expression (1) to determine the optimum frequency of vibration of the orifice containing plate. The viscosity of ammonium nitrate solution is significantly higher than both that of ammonium nitrate melt and also water. Thus, the ammonium nitrate solution is no longer an inviscid liquid, as assumed in derivation of expression (1), but is a viscid liquid the flow properties of which are better describedby expression (2). The transition between inviscid and viscid flow is not abrupt, however, where the viscosity of the liquid is less than 1.5 cP ($0.0015$ Ns.m$^{-2}$) then expression (1) is usually more appropriate, whereas at higher viscosities expression (2) is more appropriate.

The plate used in the prilling process is generally circular in plan view and may also be dished such that the liquid jet issues from the convex side of the plate. Generally each plate contains a plurality of orifices, for example from 2000 to 3000 per plate. Although the vibration of the plate may be through a reciprocating translational movement it is particularly convenient to vibrate the plate through a reciprocating rotational movement wherein the axis of rotation is through the plate, e.g. through the centre of the plate, in a direction generally coincident with the direction of the liquid jet or jets produced.

Where the vibration is through a reciprocating rotational movement it is preferred that the vibration has an amplitude equivalent to $10^{-5}$ to $10^{-3}$ radians of rotation.

The liquid from which explosive grade ammonium nitrate is usually produced comprises a solution containing from 90 to 98% w/w ammonium nitrate, more usually from 92 to 95% w/w ammonium nitrate.

The liquid jet formed by the orifice has a velocity which depends upon the size of the orifice and upon the mass flowrate. The orifice is usually in the form of a circular hole having a diameter from 0.5 to 2 mm, e.g. 0.75, 1.1 or 1.13 mm. In keeping with the teaching of EP-A-0320153 it is also preferred that the flow through the orifice is laminar and uniform flow of the liquid jet is achieved. Similarly, it is preferred that the Reynolds Number does not exceed 2300, and more particularly is in the range from 500 to 2000."

More particularly this present invention concerns the manner in which moist prill (commonly extravagantly called "wet" prill) as produced by a process such as that described in UK 91 24 304.8 is dried, and conditioned by the drying process, to yield EGAN prill product.

The conventional manner in which this drying or conditioning is effected is by using a long cylindrical rotating drum through which the "wet" prill moves continuously. The prill particles are involved in conductive heat transfer and convective heat transfer. It is not an especially gentle process and it does not realise potentially achievable reductions in particle density.

We have now found that substantially monosized EGAN prill as is collected at the base of a prilling tower and containing about 2 to about 5% (preferably 3 to 5%) residual water by weight is more effectively dried and conditioned to yield a product of bulk density around 0.6 to 0.7 gm/cc (cf about 0.8 to 0.9 gm/cc for drum product) by a process of solids plug flow fluidisation by a vertical transverse flow of drying gas (usually warmed ambient air). Typical residence times in the plug flow drier might be 10 to 30 minutes (cf 20 to 30 mins for a rotary drier) to yield a similar final water content of around 0.1 to 0.2% by weight water.

EGAN prill preferably essentially consists of ammonium nitrate, aside from small amounts of desired additives such as crystal habit modifiers, anticaking agents or other surface modifiers as known in the EGAN art. Explosive compositions use on occasion other nitrates in addition to AN and, provided they are compatible with the prilling process and allow the desired degree of drying and pore conditioning, they may be included in the EGAN particles treated by the present process.

Under solids plug flow, drying within the fluidised mass of prill particles is essentially wholly by convective heat transfer with the fluidising gas flow. There is little lateral mixing of particles. It is an intense but gentler process than rotary drum drying. Additionally, residence times are alterable simply by adjustment of bed height, allowing facile changes of product properties.

The solids plug flow fluidised bed drying process allows the uniformity of feed prill composition and size to be preserved through to the final dried EGAN product. The uniformity of the feed EGAN prill, as is produced by the method of UK 9124304.8, enables the control potentiality of the solids plug flow fluidised bed drier to be fully realised so that a more uniform and, if desired, more porous EGAN product is achievable than by methods such as rotary drum drying.

The most important variables in the conduct of the described prilling and drying process are: melt composition (especially AN:$H_2O$ balance), spray head temperature, exit prill temperature and moisture content, drying fluidisation gas temperature and dew point, and, of course, feed prill temperature and moisture content and its residence time in the drying process.

The drying process may be conducted in two or more stages operating with different input gas temperatures. Preferably, wet prill fed directly from the prill tower base to the fluidised bed drier (or first drier of a train) is at a temperature below 80°C.

Drying gas temperatures in the range 50 to 70°C are very suitable. If desired an initial stage of a drying train may effect prill cooling and may use relatively cool fluidising gas (e.g. air at 20°C). This may be followed by a second stage using ambient air warmed to, say, 50-55°C, a third stage using ambient air warmed to say 65-70°C and a final cooling stage (in which moisture removal is completed) using relatively cool ambient air. Plainly, there is scope for much process variation enabling controlled adjustment of final product EGAN prill properties, especially porosity, prill strength (friability), and selected final moisture content in the range 0.1 to 0.3% by weight.

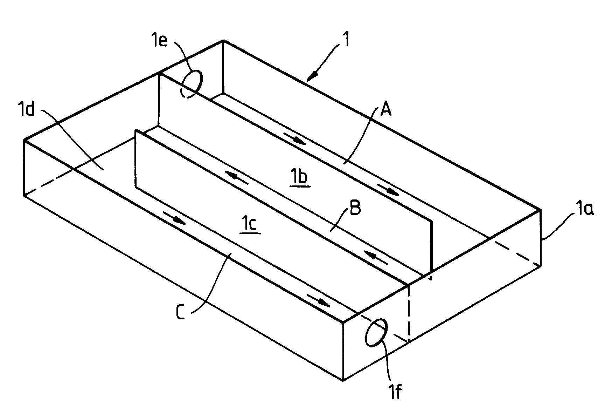

The attached Drawing is a schematic representation of a solids plug flow fluidised bed drier 1. The drier 1 basically consists of an open rectangular tray 1a about 1 m long and 0.3 m wide divided in to 3 tracks A, B, C by divider walls 1b and 1c, so creating a total particle pathway (A+B+C) of length: width ratio about 30:1. The base 1d of the drier 1 is a screen up through which fluidising gas (e.g. warm ambient air, 50-70°C) flows from duct means (not shown). Wet prill (not illustrated) enters the drier through port le and exits through port 1f. The particle size in the fluidised bed might suitably be about 1.7 mm average diameter (range 1.5 to 2.0 mm) and have an initial moisture level of 3% by weight. The residence time may be, say, 20 minutes (velocity 15cm/min) with a well fluidised bed operating at warm air velocity of 1.5 - 2.0 m/s (twice the minimum fluidising velocity). The moisture content of the dried prill exiting the drier through port 1f would typically be in the range 0.2 to 0.6% by weight.

of 50-55°C, thereafter at a temperature in the range of 65-70°C, and finally at ambient temperature.

5. A process according to any one of the preceding claims **characterised in that** the operating velocity of the drying gas is 1.5 - 2.0 m/s.

## Claims

1. A process for obtaining explosives grade ammonium nitrate (EGAN) prill comprising the step of drying substantially mono-sized EGAN prill as is collected at the base of a prilling tower, the said prill containing from about 2 to about 5% residual water by weight, wherein said drying step is achieved by a process of solids plug flow fluidisation using a vertical transverse flow of drying gas to yield a product of bulk density around 0.6 to 0.7 gm/cc and a final water content in the range of from around 0.1 to 0.6% by weight water.

2. A process according to claim 1 **characterised in that** the residence time during the plug flow drying step is from 10 to 30 minutes.

3. A process according to claim 1 or claim 2 **characterised in that** the drying gas temperature is in the range of from 50 to 70°C.

4. A process according to claim 1 or claim 2 **characterised in that** the drying is accomplished in sequential temperature controlled stages wherein the drying gas is initially at a temperature of 20°C, subsequently at a temperature in the range

**European Patent Office**

## EUROPEAN SEARCH REPORT

Application Number

EP 93 30 3111

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1 293 721 (E.I. DU PONT DE NEMOURS AND COMPANY) * page 5, left column, line 38 - page 6, left column, line 13; figures 2B,C * | 1-5 | C06B31/28 F26B3/08 C05C1/02 |
| Y | GB-A-1 171 976 (NITRATES & ENGRAIS) * the whole document * | 1-5 | |
| Y | GB-A-588 054 (THE CONSOLIDATED MINING AND SMELTING COMPANY OF CANADA, LIMITED.) * page 3, line 89 - page 4, line 129; claims * | 1-5 | |
| Y | EP-A-0 233 384 (STAMICARBON B.V.) * page 5 - page 14 * | 1-5 | |
| Y | GB-A-1 410 793 (VYZKUMNY USTAV CHEMICKYCH ZARIZENI BRNO) * claims; figures * | 4 | |
| | ----- | | TECHNICAL FIELDS SEARCHED (Int. Cl.5) |
| | | | F26B C05C C06B B01J |

The present search report has been drawn up for all claims

| Place of search | Date of completion of the search | Examiner |
|---|---|---|
| THE HAGUE | 06 AUGUST 1993 | SCHUT R.J. |

EPO FORM 1503 03.82 (P0401)